# EUROPÄISCHE PATENTSCHRIFT

(11) **EP 1 784 320 B1**
(45) Veröffentlichungstag und Bekanntmachung des Hinweises auf die Patenterteilung: **11.02.2009**
(21) Anmeldenummer: 05756830.5
(22) Anmeldetag: 27.06.2005
(51) Int. Cl.: B60R 21/01

(54) **VERFAHREN UND VORRICHTUNG ZUR BEWERTUNG VON FAHRSITUATIONEN**
METHOD AND DEVICE FOR EVALUATING DRIVING SITUATIONS
PROCEDE ET DISPOSITIF POUR EVALUER DES SITUATIONS DE CONDUITE

(30) Priorität: 27.08.2004 DE 102004041521
(43) Veröffentlichungstag der Anmeldung: 16.05.2007
(73) Patentinhaber: ROBERT BOSCH GMBH, 70442 Stuttgart (DE)
(72) Erfinder: KUTTENBERGER, Alfred, 71154 Nufringen (DE); JOACHIM, Carsten, 66589 Merchweiler (DE)
(86) Internationale Anmeldenummer: PCT/EP2005/052983
(87) Internationale Veröffentlichungsnummer: WO 2006/024557

(56) Entgegenhaltungen:
- EP-A- 1 316 481
- US-A1- 2002 169 534
- US-A1- 2003 051 530
- US-A1- 2003 097 212
- US-B1- 6 549 836

## Beschreibung

### Stand der Technik

Die Zielsetzung der EU nach einer Reduktion der Verkehrstoten um 50 % bis 2012 erfordert Neuentwicklungen im Bereich der Fahrzeug- und Verkehrssicherheit. Solche Systeme umfassen beispielsweise reversible Mittel zum Insassenschutz, wie ein mittels Elektromotor angetriebener reversibler Gurtstraffer, welche auch schon vor dem eigentlichen Unfall angesteuert werden können. Bei herkömmlichen Systemen zur Ansteuerung von reversiblen Schutzmitteln werden Fahrzustandsdaten ermittelt und ausgewertet. Basierend auf der Auswertung wird eine Klassifizierung des Fahrzustandes nach einem der drei Zustände Notbremsung, Untersteuern, Übersteuern vorgenommen. Die Ansteuerung des reversiblen Insassenschutzsystems beruht auf dem reinen Erkennen von einem oder mehreren dieser Zustände.

Aus EP 1 316 481 A2 ist es bekannt, eine Kollisionswahrscheinlichkeit aus den Signalen einer Radarsensorik und fahrdynamischen Signalen wie der Gierrate des Lenkwinkels und der Eigengeschwindigkeit zu bestimmen.

Aus US 6 549 836 B1 ist es bekannt, Personenschutzmittel in Abhängigkeit von einem bei einem Crash auftretenden Beschleunigungssignal und einem Safing-Signal zu steuern.

### Vorteile der Erfindung

Mit dem erfindungsgemäßen Verfahren zur Bewertung von Fahrsituationen soll die Verletzungsschwere und das Gefahrenpotential im Falle eines Unfalls sowie bei starker Insassenbewegung und/oder Insassenauslenkung, beispielsweise Anschlagen mit dem Kopf an die Scheibe, für die Insassen vermindert werden. Dabei werden zur Bewertung der Fahrsituation die Fahrzustandsdaten hinsichtlich ihres Gefahrenpotentials für Fahrzeuginsassen ausgewertet und numerisch abgebildet, wobei ein Gesamtgefahrenpotential durch Ermitteln und/oder Abschätzen von momentan wirkenden Kräften und/oder von zu erwartenden Kraftwirkungen und einer daraus resultierenden Bewegung bzw. Auslenkung des Insassen bestimmt wird. Das Gesamtgefahrenpotential kann dann beispielsweise als Entscheidungsgrundlage genutzt werden, um reversible Insassenschutzmittel, wie z.B. einen reversiblen Gurlstraffer, rechtzeitig zu aktivieren. Dieser kann den Insassen im Sitz fixieren und die Gurtlose reduzieren. Durch die rechtzeitige Aktivierung der reversiblen Insassenschutzmittel bei einer für den Insassen kritischen Situation kann die Verletzungsgefahr vermindert werden.

Die erfindungsgemäße Vorrichtung zur Durchführung des Verfahrens kann in vorteilhafter Weise zur Ermittlung und Auswertung der Fahrzustandsdaten auf bereits im Fahrzeug vorhandene Sensorsysteme und/oder Steuergeräte zurückgreifen, die beispielsweise Teil eines elektronischen Stabilitätsprogramms (ESP) und/oder eines Antiblockiersystems (ABS) und/oder eines Airbagsteuersystems sind.

Bei einer erfindungsgemäßen Ausführungsform wird das Gesamtgefahrenpotential als abstrakter numerischer Wert, vorzugsweise im Wertebereich von 0 bis 1, berechnet und modular aus mehreren Teilgefahrenpotentialen zusammengesetzt. Ein erstes Teilgefahrenpotential repräsentiert beispielsweise die Gefahr für den Insassen infolge der momentanen Krafteinwirkungen und ein zweites Teilgefahrenpotential repräsentiert die antizipierte Gefahr durch die zu erwartenden Krafteinwirkungen. Im Unterschied zu herkömmlichen Verfahren, die eine Klassifizierung des Fahrzustandes als Grundlage für eine Auslöseentscheidung vornehmen, ermittelt das erfindungsgemäße Verfahren das generelle Gefahrenpotential für den Insassen und deren numerische Abbildung.

Das Gesamtgefahrenpotential wird beispielsweise als binäres oder auch kontinuierliches Eingabesignal an eine Ansteuereinheit Insassenschutzmittel ausgegeben. Der kontinuierlich ausgegebene Gefahrenwert kann auch für andere Sicherheitssysteme als Zusatzinformation verwendet werden.

Das erste Teilgefahrenpotential wird aus Gefahrengrößen Querbelastung und/oder Längsbelastung und/oder Geschwindigkeit bestimmt wird.

Die Querbelastung wird aus den Fahrzustandsdaten Querbeschleunigung und Lenkwinkel und/oder Querbeschleunigungsänderung und/oder Lenkwinkeländerung berechnet und die Längsbelastung kann aus den Fahrzustandsdaten Längsbeschleunigung und/oder Lenkwinkel und/oder Längsbeschleunigungsänderung und/oder Lenkwinkeländerung berechnet werden.

Durch die in den abhängigen Ansprüchen aufgeführten Maßnahmen und Weiterbildungen sind vorteilhafte Verbesserungen des im unabhängigen Patentanspruch angegebenen Verfahrens und der im unabhängigen Patentanspruch angegebenen Vorrichtung möglich.

Die zweite Teilgefahr kann beispielsweise aus den Gefahrengrößen Lenkgefahr und/oder Lenktendenz und/oder Geschwindigkeit bestimmt werden, wobei bei der Ermittlung der zweiten Teilgefahr ein Fahrerwunsch und ein Fahrzeugzustand berücksichtigt werden.

Eine Lenkstabilität als Teil der Gefahrengröße Lenkgefahr kann beispielsweise aus den Fahrzustandsdaten Geschwindigkeit und/oder Querbeschleunigung und/oder Längsbeschleunigung und/oder Lenkwinkel und/oder Gierrate berechnet werden. Eine Drifttendenz als Teil der Gefahrengröße Lenkgefahr kann den Fahrzustandsdaten Geschwindigkeit und/oder Querbeschleunigung und/oder Längsbeschleunigung und/oder Lenkwinkel und/oder Gierrate und deren zeitlichen Ableitungen berechnet werden.

Ein Lenkänderungsverhalten als Teil der Gefahrengröße Lenktendenz kann beispielsweise aus den Fahrzustandsdaten Gierbeschleunigung und/oder Gierrate und/oder Lenkwinkeländerung und/oder Querbeschleunigung und/oder Querbeschleunigungsänderung und/oder Geschwindigkeit berechnet werden. Eine Lenkplausibilität als Teil der Gefahrengröße Lenktendenz kann aus den Fahrzustandsdaten Gierrate und/oder Querbeschleunigung und/oder Lenkwinkel berechnet werden.

### Zeichnung

Ein Ausführungsbeispiel der Erfindung ist in der Zeichnung dargestellt und wird in der nachfolgenden Beschreibung näher erläutert.

Es zeigen
- Figur 1: ein Blockschaltbild eines Insassenschutzsystems mit einer erfindungsgemäßen Vorrichtung zur Bewertung von der Fahrsituationen,
- Figur 2: ein Blockdiagramm des erfindungsgemäßen Verfahrens zur Bewertung von Fahrsituationen,
- Figur 3: ein Blockdiagramm eines Teilverfahrens zur Bestimmung eines ersten Teilgefahrenpotentials des Verfahrens aus Fig. 2, und
- Figur 4: ein Blockdiagramm eines Teilverfahrens zur Bestimmung eines zweiten Teilgefahrenpotentials des Verfahrens aus Fig. 2.

### Beschreibung

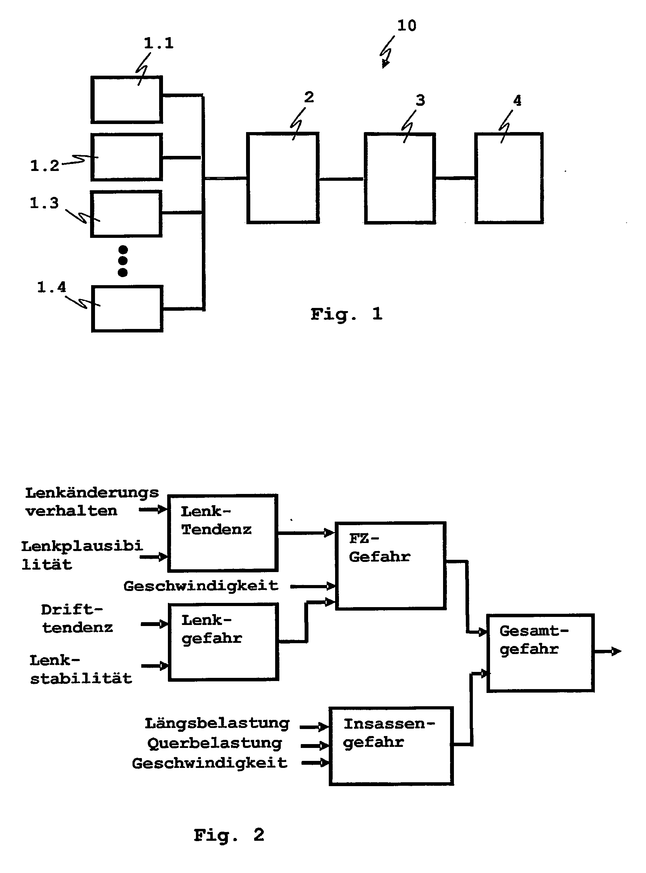

Wie aus Fig. 1 ersichtlich ist, umfasst ein Insassenschutzsystem 10 ein ESP-Steuergerät 1.1, ein ABS-Steuergerät 1.2 und ein Airbagsteuergerät 1.3, welche Fahrzustandsdaten ermitteln auswerten und weiterleiten, eine Auswerte- und Steuereinheit 2, welches die ermittelten Fahrzustandsdaten empfängt und hinsichtlich ihres Gefahrenpotentials für Fahrzeuginsassen auswertet und das bestimmte Gesamtgefahrenpotential an eine Auslöseeinheit 3 zur Aktivierung einer reversibles Insassenschutzkomponente 4, beispielsweise einem Gurtstraffer, ausgibt. Die Auswerte- und Steuereinheit 2 bestimmt das Gesamtgefahrenpotential "Gesamtgefahr" durch Ermitteln und/oder Schätzen von momentanen Krafteinwirkungen und/oder von zu erwartenden Kraftwirkungen und einer daraus resultierenden Bewegung des Insassen.

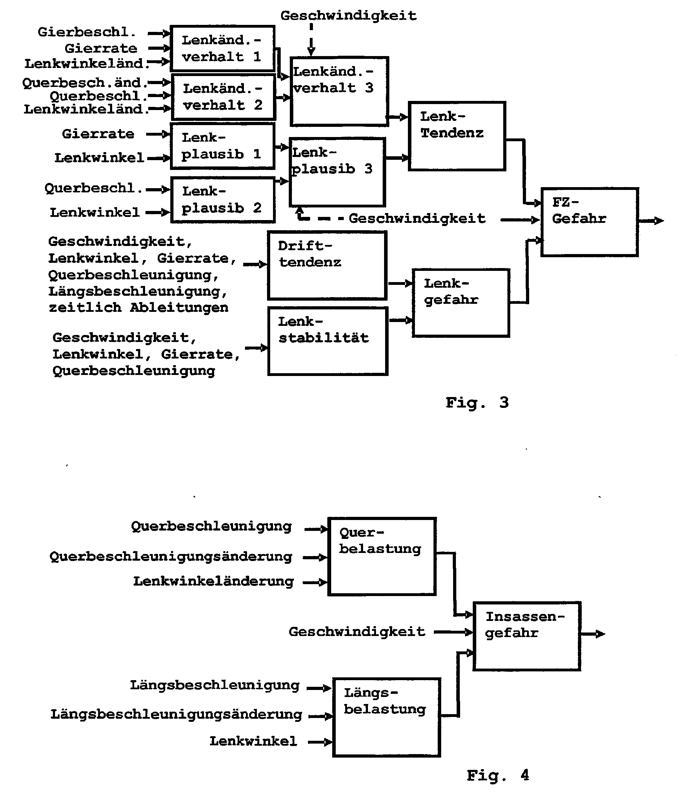

Wie aus Fig. 2 ersichtlich ist, bestimmt das erfindungsgemäße Verfahren zur Bewertung von Fahrsituationen ein Gesamtgefahrenpotential "Gesamtgefahr" als abstrakten numerischen Wert, beispielsweise im Wertebereich [0...1], welcher die Gefahr für den Insassen repräsentiert. Dieser Wert "Gesamtgefahr" setzt sich modular aus Teilgefahrenpotentialen "Insassengefahr" und "FZGefahr" zusammen, die sich wiederum aus Untergrößen zusammensetzen. Die beiden dargestellten Hauptstränge "Insassengefahr" und "FZGefahr" repräsentieren die Teilgefahrenpotentiale für den Insassen infolge der momentanen Kraflwirkungen, siehe im Detail Fig. 4, bzw. das antizipierte Gefahrenpotential durch zukünftig mögliche Krafteinwirkungen, welche man aufgrund des Fahrzustandes erwartet, siehe im Detail Fig. 3.

Das Gesamtgefahrenpotential "Gesamtgefahr" ist die Information, die zur Auslösung der reversiblen Insassenschutzkomponente hier des Gurtstraffers 4 führt. Ein entsprechender Auslösealgorithmus berücksichtigt den ermittelten Wert "Gesamtgefahr" und seinen zeitlichen Verlauf und trifft darauf basierend beispielsweise unter Verwendung von entsprechenden Schwellwerten eine binäre Entscheidung "An" oder "Aus" Hierbei wird beispielsweise ein oberer Schwellwert abgefragt, oberhalb dessen der Gurtstraffer ausgelöst wird (AN). Eine Bedingung für ein Rücksetzen ist beispielsweise, dass der Wert "Gesamtgefahr" z.B. für eine einzustellende Zeitspanne unterhalb eines unteren Schwellwertes (AUS) liegt. Es sind auch andere Ausführungsformen vorstellbar, beispielsweise mittels eines Integrals, oder es können mehrstufige Entscheidungen für verschiedene Gurtkräfte realisiert werden. Im Unterschied zum Stand der Technik, bei dem eine Klassifizierung des Fahrzustandes die Grundlage zur Auslöseentscheidung bildet, ist die Zielsetzung der vorliegenden Erfindung die Ermittlung einer generellen Gefahr für den Insassen und deren abstrakte numerische Abbildung. Dieses Gesamtgefahrenpotential "Gesamtgefahr" setzt aus dem Teilgefahrenpotential "Insassengefahr" infolge momentan wirkender Kräfte sowie dem Teilgefahrenpotential "FZGefahr" aufgrund zu erwartender Kräfte wegen des momentanen Fahrzustandes zusammen. Zur Ermittlung des Teilgefahrpotentials "FZGefahr" werden der Fahrerwunsch "Soll" und der aktuelle Fahrzeugzustand "Ist" und eine Schwimmwinkelschätzung berücksichtigt und einer Bewertung unterzogen. Der Wert "Gesamtgefahr" wird in jedem Zeitschritt neu errechnet und ist somit eine kontinuierlich und nicht etwa eine sprunghaft verlaufende Größe.

Wie aus Fig. 4 ersichtlich ist, wird das Teilgefahrenpotential "Insassengefahr", d.h. die momentane Insassengefahr, aufgrund wirkender Kräfte und/oder Auslenkungen und/oder Bewegungen und/oder Beschleunigungen aus zwei Gefahrengrößen gebildet. Eine Gefahrengröße "Querbelastung" repräsentiert die Querwirkung und bewertet diese Teilgefahr aufgrund von Querbeschleunigung und/oder Lenkwinkel und/oder Querbeschleunigungsänderungen. Die andere Gefahrengröße "Längsbelastung" repräsentiert die Längswirkung und bewertet diese aufgrund von Längsbeschleunigung und/oder Längsbeschleunigungsänderungen und/oder Lenkwinkeländerungen.

Wie aus Fig. 3 ersichtlich ist, wird das Teilgefahrenpotential "FZGefahr", d.h. die Gefahr für den Insassen die aufgrund zu erwartender Krafteinwirkung besteht, aus den Gefahrengrößen "Lenkgefahr" und "Lenktendenz" gebildet, die eine Bewertung des Fahrzustandes hinsichtlich seiner Stabilität "Lenkgefahr" bzw. seiner Plausibilität "Lenktendenz" vollziehen. Dazu wird zur Errechnung der Gefahrengröße "Lenkstabilität", die Teil der Fahrzeuggröße "Lenkgefahr" ist, die Fahrzeugreaktion mit dem Fahrerwunsch verglichen, unter Einbeziehung der Fahrzustandsgrößen Lenkwinkel und/oder Querbeschleunigung und/oder Fahrzeuggeschwindigkeit und/oder Radstand und/oder der Gierrate. Die Gefahrengröße "Drifttendenz", die ebenfalls Teil der Gefahrengröße "Lenkgefahr" ist, berücksichtigt neben obigen Größen noch die zeitliche Ableitung dieser Größen und eine darauf aufbauende Schwimmwinkelschätzung.

Die Gefahrengröße "Lenktendenz" basiert auf Plausibilitätsbetrachtungen für die Stabilität des Fahrzustandes. Zur Bestimmung der Gefahrengröße "Lenktendenz" werden durch Kombination der Fahrzustandsdaten Gierbeschleunigung und/oder Gierrate und/oder Lenkwinkeländerungen und/oder Querbeschleunigung und/oder Querbeschleunigungsänderungen verschiedene Lenkänderungsverhalten "Lenkänd.-verhalt 1", "Lenkänd.-verhalt 2" und "Lenkänd.-verhalt 3" berechnet. Zur Bestimmung der Gefahrengröße "Lenktendenz" werden durch Kombination der Fahrzustandsdaten Gierrate und/oder Querbeschleunigung und/oder Lenkwinkel Lenkplausibilitäten "Lenkplausib 1", "Lenkplausib 2" und "Lenkplausib 3" berechnet. Optional kann bei der Berechnung der Lenkänderungsverhalten oder der Lenkplausibilitäten als weitere Größe die Geschwindigkeit berücksichtigt werden. Dies ist in Fig. 3 durch gestrichelte Pfeile dargestellt.

Die beschriebenen beispielhaften Kombinationen der Fahrzustandgrößen zur Ermittlung der verschiedenen Gefahrengrößen und/oder der Teilgefahrenpotentiale "Insassengefahr" und "FZGefahr" können durch weitere Kombinaten der angegebenen Fahrzustandsdaten oder Gefahrengrößen ergänzt werden. So kann beispielsweise die Gefahrengröße "Geschwindigkeit" bei der Bestimmung des Gesamtgefahrenpotentials "Gesamtgefahr" anstatt bei der Berechnung der Teilgefahrenpotentiale "Insassengefahr" und "FZGefahf" berücksichtigt werden. Zudem können weitere nicht angegebene Fahrzustandsdaten und Gefahrengrößen, die geeignet sind die Teilgefahrenpotentials zu bestimmen berücksichtigt werden. Zusätzlich können die verschiedenen Gefahrengrößen und/oder Teilgefahrenpotentiale einer Gewichtung unterzogen werden.

Im Unterschied zum Stand der Technik wird bei der vorliegenden Erfindung keine Klassifizierung der Fahrzustände in Untersteuern und Übersteuern vorgenommen, sondern es wird im Wesentlichen eine Abweichung zwischen Fahrerwunsch und Fahrzeugverhalten als mögliche Gefahr für den Insassen bewertet. Zur mathematischen Ermittlung der Gefahrengrößen, der Teilgefahrenpotentiale und des Gesamtgefahrenpotentials kann eine Methodik angewendet werden; die mit weichen Schwellen arbeitet, beispielsweise eine Ausführungsform einer Fuzzy-Logik.

## Patentansprüche

1. Verfahren zur Bewertung von Fahrsituationen, bei welchem Fahrzustandsdaten ermittelt und ausgewertet werden, wobei die Fahrzustandsdaten hinsichtlich ihres Gefahrenpotentials für Fahrzeuginsassen ausgewertet und numerisch abgebildet werden, wobei ein Gesamtgefahrenpotential durch Ermitteln von momentan wirkenden Kräften und von zu erwartenden Kraftwirkungen und einer daraus resultierenden Bewegung des Insassen bestimmt wird, **dadurch gekennzeichnet, dass** das Gesamtgefahrenpotential als abstrakter numerischer Wert, vorzugsweise im Wertebereich von 0 bis 1, berechnet wird, welcher sich modular aus einem ersten Teilgefahrenpotential und einem zweiten Teilgefahrenpotential zusammensetzt, wobei das erste Teilgefahrenpotential die Gefahr für den Insassen infolge der momentanen Krafteinwirkungen und das zweite Teilgefahrenpotential die antizipierte Gefahr durch die zu erwartenden Krafteinwirkungen repräsentieren, dass das erste Teilgefahrenpotential aus einer ersten Gefahrengröße und/oder einer zweiten Gefahrengröße und/oder einer dritten Gefahrengröße bestimmt wird, dass die erste Gefahrengröße aus den Fahrzustandsdaten Querbeschleunigung und Lenkwinkel berechnet wird und die zweite Gefahrengröße aus den Fahrzustandsdaten Längsbeschleunigung und Lenkwinkel berechnet wird, wobei die dritte Gefahrengröße eine Geschwindigkeit ist, dass das zweite Teilgefahrenpotenzial aus einer vierten Gefahrengröße und einer fünften Gefahrengröße bestimmt wird, wobei die vierte Gefahrengröße eine Lenkgefahr und die fünfte Gefahrengröße eine Lenktendenz ist

2. Verfahren nach Anspruch 1, **dadurch gekennzeichnet, dass** bei der Ermittlung der zweiten Teilgefahr ein Fahrerwunsch und ein Fahrzeugzustand berücksichtigt werden.

3. Verfahren nach Anspruch 1 oder 2, **dadurch gekennzeichnet, dass** aus den Fahrzustandsdaten Geschwindigkeit und/oder Querbeschleunigung und/oder Längsbeschleunigung und/oder Lenkwinkel und/oder Gierrate eine Lenkstabilität als Teil der vierten Gefahrengröße berechnet wird und aus den Fahrzustandsdaten Geschwindigkeit und/oder Querbeschleunigung und/oder Längsbeschleunigung und/oder Lenkwinkel und/oder Gierrate und deren zeitlichen Ableitungen ein Drifttendenz und/oder eine Schwimmwinkeleinschätzung als Teil der vierten Gefahrengröße berechnet werden.

4. Verfahren nach einem der Ansprüche 1 bis 3, **dadurch gekennzeichnet, dass** aus den Fahrzustandsdaten Gierbeschleunigung und/oder Gierrate und/oder Lenkwinkeländerung und/oder Querbeschleunigung und/oder Querbeschleunigungsänderung ein Lenkänderungsverhalten als Teil der fünften Gefahrengröße berechnet wird und aus den Fahrzustandsdaten Gierrate und/oder Querbeschleunigung und/oder Lenkwinkel eine Lenkplausibilität als Teil der fünften Gefahrengröße berechnet wird.

5. Verfahren nach einem der Ansprüche 1 bis 4 **dadurch gekennzeichnet, dass** das berechnete Gesamtgefahrenpotential und/oder der berechnete zeitliche Verlauf des berechneten Gesamtgefahrenpotentials als Eingabegröße in eine Auslöseeinheit (4) für eine Insassenvorrichtung (5), vorzugsweise einen Gurtstraffer, eingegeben werden.

6. Verwendung einer Vorrichtung zur Durchführung des Bewertungsverfahrens nach einem der Ansprüche 1 bis 5 **gekennzeichnet durch** eine Auswerte- und Steuereinheit (2), welche Fahrzustandsdaten von einem ESP-Steuergerät (1.1) und/oder einem ABS-Steuergerät (1.2) und/oder einem Airbagsteuergerät (1.3) empfängt und hinsichtlich ihres Gefahrenpotentials für Fahrzeuginsassen auswertet und als numerische Abbildung an eine Auslöseeinheit (3) für ein Insassenschutzsystem (4) ausgibt, wobei die Auswerte- und Steuereinheit (2) das Gesamtgefahrenpotential **durch** Ermitteln und/oder Berechnen von momentanen Krafteinwirkungen und/oder von zu erwartenden Krafteinwirkungen und einer daraus resultierenden Bewegung des Insassen bestimmt.

## Claims

1. Method for evaluating driving situations in which driving state data are acquired and evaluated, wherein the driving state data are evaluated in terms of their risk potential for a vehicle occupant and are mapped numerically, wherein a total hazard potential is determined by acquiring instantaneously acting forces and anticipated force effects and a resulting movement of the vehicle occupant, **characterized in that** the overall hazard potential is calculated as an abstract numerical value, preferably in the value range from 0 to 1 which is composed in a modular fashion of a first partial hazard potential and a second partial hazard potential, wherein the first partial hazard potential represents the risk for the vehicle occupant owing to the instantaneous force effects, and the second partial hazard potential represents the anticipated hazard due to the anticipated force effects, **in that** the first partial hazard potential is determined from a first hazard variable and/or a second hazard variable and/or a third hazard variable, **in that** the first hazard variable is calculated from the driving state data for the lateral acceleration and steering angle, and the second hazard variable is calculated from the driving state data for the longitudinal acceleration and steering angle, wherein the third hazard variable is a velocity, **in that** the second partial hazard potential is determined from a fourth hazard variable and a fifth hazard variable, wherein the fourth hazard variable is a steering hazard and the fifth hazard variable is a steering tendency.

2. Method according to Claim 1, **characterized in that** a driver's request and a state of the vehicle are taken into account in the acquisition of the second partial hazard.

3. Method according to Claim 1 or 2, **characterized in that** a steering stability is calculated as part of the fourth hazard variable from the driving state data for the velocity and/or lateral acceleration and/or longitudinal acceleration and/or steering angle and/or yaw rate, and a drift tendency and/or a floating angle estimate are calculated as part of the fourth hazard variable from the driving state data for the velocity and/or lateral acceleration and/or longitudinal acceleration and/or steering angle and/or yaw rate and their derivatives over time.

4. Method according to one of Claims 1 to 3, **characterized in that** a steering change behaviour is calculated as part of the fifth hazard variable from the driving state data for the yaw acceleration and/or yaw rate and/or change in the steering angle and/or lateral acceleration and/or change in the lateral acceleration, and a steering plausibility is calculated as part of the fifth hazard variable from the driving state data for the yaw rate and/or lateral acceleration and/or steering angle.

5. Method according to one of Claims 1 to 4, **characterized in that** the calculated overall hazard potential and/or the calculated time profile of the calculated overall hazard potential are input as input variables into a triggering unit (4) for a vehicle occupant protection device (5), preferably a seatbelt retentioner.

6. Use of a device or carrying out the evaluation method according to one of Claims 1 to 5, **characterized by** an evaluation and control unit (2) which receives driving state data from an ESP control unit (1.1) and/or an ABS control unit (1.2) and/or an airbag control unit (1.3) and evaluates them in terms of their hazard potential for vehicle occupants and outputs them as a numerical mapping to a triggering unit (3) for a vehicle occupant protection system (4), wherein the evaluation and control unit (2) determine the overall hazard potential by acquiring and/or calculating instantaneous force effects and/or anticipated force effects and a resulting movement of the vehicle occupant.

## Revendications

1. Procédé d'évaluation de situations de conduite selon lequel on détermine et on exploite des données d'état de conduite,
les données d'état de conduite étant exploitées quant à leur potentiel de risque pour les occupants du véhicule et ces données sont sous forme numérique,
on détermine un potentiel global de risque en déterminant les forces agissant momentanément et les effets prévisibles des forces ainsi que le mouvement résultant des occupants,
**caractérisé en ce qu'**
on calcule le potentiel global de risque comme valeur numérique abstraite de préférence dans une plage de valeurs comprises entre 0 et 1, et qui se compose de façon modulaire d'un premier potentiel partiel de risque et d'un second potentiel partiel de risque,
le premier potentiel partiel de risque représentant le risque pour les occupants à cause des actions momentanées des forces et le second potentiel partiel de risque représentant le risque anticipé lié à l'action prévisible des forces,
on définit le premier potentiel partiel de risque à partir d'une première grandeur de risque et/ou une seconde grandeur de risque et/ou une troisième grandeur de risque,
on calcule la première grandeur de risque à partir des données d'état du véhicule, accélération transversale et angle de direction,
on calcule la seconde grandeur de risque à partir des données d'état de conduite qui sont l'accélération longitudinale et l'angle de braquage,
la troisième grandeur de risque étant la vitesse, et
on définit le second potentiel partiel de risque à partir d'une quatrième grandeur de risque et d'une cinquième grandeur de risque, la quatrième grandeur de risque étant un risque de direction et la cinquième grandeur de risque étant une tendance de direction.

2. Procédé selon la revendication 1,
**caractérisé en ce qu'**
on tient compte de la demande du conducteur et de l'état du véhicule pour déterminer le second risque partiel.

3. Procédé selon la revendication 1 ou 2,
**caractérisé en ce qu'**
à partir des données d'état constituées par la vitesse et/ou l'accélération transversale et/ou l'accélération longitudinale et/ou l'angle du braquage et/ou la vitesse de lacet, on calcule une stabilité de direction comme partie de la quatrième grandeur de risque et à partir des données d'état vitesse et/ou accélération transversale et/ou accélération longitudinale et/ou angle de braquage et/ou vitesse de lacet et de leur dérivée en fonction du temps, on calcule une tendance à la dérive et/ou une évaluation de l'angle de flottement comme partie de la quatrième grandeur de risque.

4. Procédé selon les revendications 1 à 3,
**caractérisé en ce qu'**
à partir des données d'état de conduite constituées par l'accélération de lacet et/ou la vitesse de lacet et/ou la variation de l'angle de braquage et/ou l'accélération transversale et/ou la variation d'accélération transversale, on calcule un comportement de variation de direction comme partie de la cinquième grandeur de risque et à partir des données d'état de conduite constituées par la vitesse de lacet et/ou l'accélération transversale et/ou l'angle de direction, on calcule une plausibilité de direction comme partie de la cinquième grandeur de risque.

5. Procédé selon les revendications 1 à 4,
**caractérisé en ce qu'**
on introduit le potentiel global calculé de risque et/ou l'évolution chronologique calculée du potentiel global calculé de risque comme grandeur d'entrée dans une unité de déclenchement (4) pour un dispositif de protection des occupants (5), de préférence un tendeur de ceinture.

6. Utilisation d'un dispositif pour la mise en oeuvre du procédé d'évaluation selon les revendications 1 à 5,
**caractérisée en ce que**
comme unité d'exploitation et de commande (2) qui reçoit les données d'état de conduite d'un appareil de commande ESP (1.1) et/ ou d'un appareil de commande ASB (1.2) et/ou d'un appareil de commande de coussin gonflable (1.3), et exploite ces données quant à leur potentiel de risque pour les occupants du véhicule et transmet ces données sous forme numérique à une unité de déclenchement (3) d'un système de protection des occupants (4),
l'unité d'exploitation et de commande (2) déterminant le potentiel global de risque en déterminant et/ou en calculant les effets momentanés des forces et/ou les effets prévisibles des forces et le mouvement des occupants qui en résulte.
